# EUROPEAN PATENT APPLICATION

(11) **EP 4 764 600 A2**
(43) Date of publication of application: **24.06.2026**
(21) Application number: 25224616.0
(22) Date of filing: 17.12.2025
(51) Int. Cl.: G01S 7/481, G01S 17/42, G01S 17/89, G01S 17/931, G01S 17/933

(54) **SYSTEMS, DEVICES, AND METHODS FOR DETECTING COLLISIONS, OBSTRUCTIONS, AND INTRUSIONS**

(30) Priority: 18.12.2024 US 202463735516 P
(71) Applicant: MDA Space and Robotics Limited, Didcot Oxfordshire OX110RL (GB)
(72) Inventor: David Huw, Jones, Didcot, OX11 0RL (GB); Pete Charles, Blacker, Didcot, OX11 0RL (GB)
(74) Representative: Mewburn Ellis LLP

(57) **Abstract**

Provided is a holographic light gate system, method, and device for detecting an obstruction. The system include a laser transmitter that generates laser light, a light projection device that forms a 3D projective surface from the laser light, and a receiver that receives reflected laser light that is reflected off of the obstruction.

## Description

### Technical Field

The following relates generally to detecting collisions, obstructions and intrusions, and more particularly to light gate systems and methods for detecting collisions, obstructions and intrusions.

### Introduction

There may be problems with detecting collisions, obstructions and intrusions in space. These may include intrusion of space-debris within a perimeter surrounding a satellite, that may go on to collide with a spacecraft. These may include obstructions to a rendezvous-and-docking mission between spacecrafts. These may include collision of a robot arm with a spacecraft during operations, particularly in the case of fully autonomous systems with no human oversight.

There may be problems with detecting collisions, obstructions and intrusions in terrestrial use-cases. These include, for example, intrusion of aircraft or UAVs in monitored airspace, intrusion of personnel through a monitored perimeter, collision of vehicles with static objects or other vehicles.

Accordingly, there is a need for an improved system and method detecting obstructions and intrusions that overcomes at least some of the disadvantages of existing systems and methods.

### Summary

Provided is a system for detecting a collision, obstruction, or intrusion. The system includes a laser transmitter that generates laser light, a light projection device that forms a three-dimensional (3D) projective surface or 3D surface projection of the laser light, and a receiver that receives reflected laser light that is reflected off of the obstruction within the surface.

The laser transmitter may be a laser rangefinder.

The 3D surface projection may form a light-gate, wherein the receiver is located at a same end as the transmitter.

The light projection device may be a digital light projector (DLP) that forms the 3D surface projection by masking.

The light projection device may be a spatial light modulator (SLM) that forms the 3D surface projection by beam forming.

The light projection device generate a hologram that forms the 3D projective surface using interference patterns.

The light projection device may include a set of mirrors using caustic engineering to form the 3D projective surface through reflection.

The light projection device may dynamically update the 3D surface projection by stepping through a sequence of different holograms.

Dynamically updating the 3D surface projection may provide a blanket detection system that monitors a wide area and that is iteratively decreased in size until a target has been pinpointed in three dimensions.

The system may further include a mirror with an aperture that allows the laser light to pass through.

The system may further include a beam expander that receives the light that passes through the aperture in the mirror, wherein the beam expander expands the laser light beam.

The mirror may reflect the reflected laser light and the laser light onto an avalanche photodiode (APD) receiver.

The APD receiver may pass a received signal to a high-speed analog to digital converter (ADC), wherein the ADC coverts the analog beam into a digital signal.

The system may further include a real-time waveform analyzer that analyzes the digital signal in real-time.

The system may further include a controller that receives the output of the real-time waveform analyzer to detect obstructions.

The system may further include a lens system to spread the 3D surface projection.

The system may further include optical techniques to shape the laser light into a projected pattern, wherein the optical techniques include any one or more of a Powell lens and curved mirror, spatial light modulator (SLM), holographic mask, a digital micromirror device (DMD) array, and caustic engineered mirrors.

The system may be used in collision avoidance for proximity and docking operations of space objects.

Provided is a method for detecting a collision, obstruction, or intrusion. The method includes generating laser light, forming a 3D surface projection from the laser light, and receiving reflected laser light that is reflected off of the obstruction.

The method may further include dynamically updating the 3D surface projection by stepping through a sequence of different holograms or other projection methodologies.

The method may further include forming the laser light into a projected pattern, wherein the optical techniques include any one or more of a Powell lens and curved mirror, spatial light modulator (SLM), holographic mask, a digital micromirror device (DMD) array, and caustic engineered mirrors.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a conventional light-gate system;
Figure 2 is a block diagram of a conventional laser rangefinder system;
Figure 3 is a block diagram of a monostatic light gate system with arbitrary three dimensional surface, in accordance with an embodiment;
Figure 4 is a block diagram of a system for detecting obstructions with holographic or masked light, in accordance with an embodiment;
Figures 5A and 5B are schematic representations of detected light and graphs of echo intensity, in accordance with an embodiment;
Figure 6 is an example light curtain system, in accordance with an embodiment;
Figure 7 is an illustration of light curtain system on a robotic arm, in accordance with an embodiment; and
Figure 8 is a flow chart of a method for obtrusion detection, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

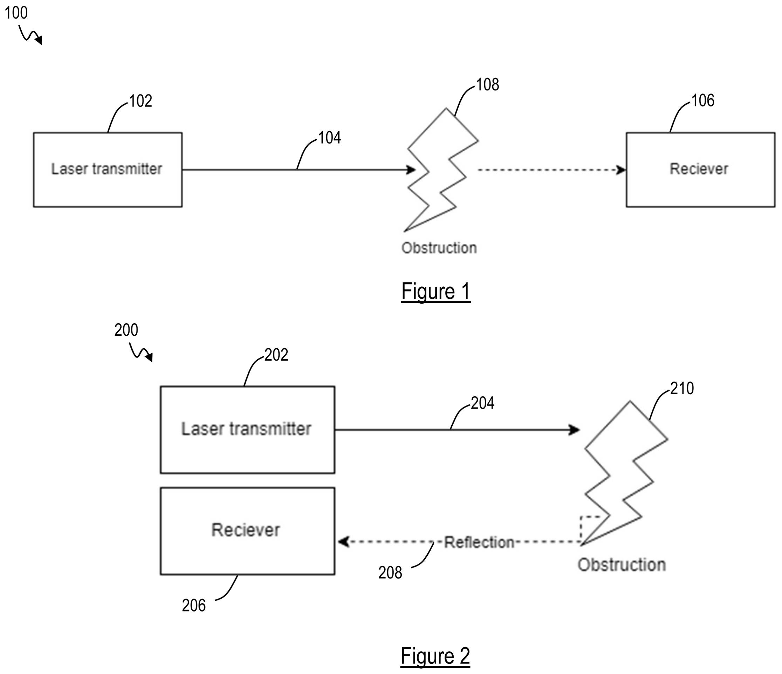

Referring to Figure 1, described therein is a conventional light gate 100 for detecting obstructions. The system 100 includes a laser transmitter 102 that emits a beam of laser light 104. The system 100 includes a receiver 106 at the opposite end of the beam of laser light 104. The receiver 106 is able to detect if the beam of laser light 104 is obstructed, crossed or broken by an obstruction 108.

Referring to Figure 2, described therein is a conventional system 200 for laser-beam based ranging. The system 200 may be, for example, a LIDAR (light detection and ranging) system or a laser rangefinder system. The system 200 includes a laser transmitter 202 that emits a beam laser light 204. The system 200 includes a receiver 206 that receives reflected laser light 208 that is reflected off of an obstruction 210. The receiver 206 is able to detect properties (e.g., laser time of flight, light intensity) of the reflected laser light 208 to determine characteristics of the obstruction 210 (e.g., distance of the obstruction 210 from laser 202, surface properties of the obstruction 210).

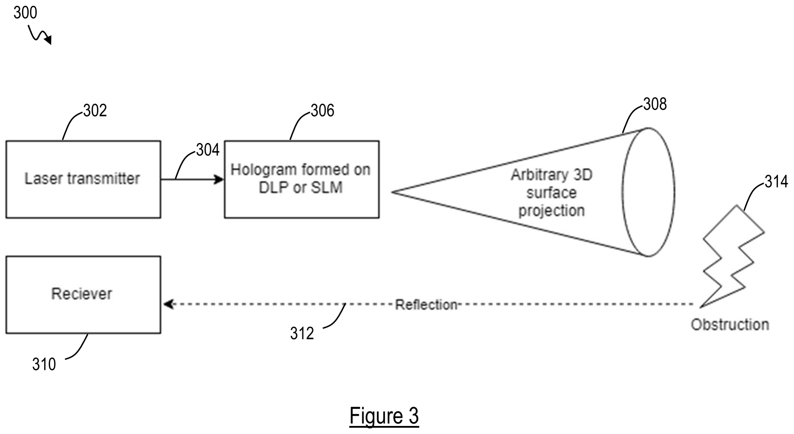

Referring to Figure 3, described therein is a system 300, in accordance with an embodiment. The system 300 may be a monostatic light gate system. The system 300 may be used in robot arm early collision warning. The system 300 may be used in collision avoidance for proximity and docking operations of space objects such as satellites. The system 300 may be used to monitor perimeter or airspace for intrusions. The system 300 may be used to detect collisions between space debris and a satellite.

The system 300 includes a laser transmitter 302 that generates laser light 304. The laser transmitter 302 may be a laser rangefinder.

The system 300 includes a light projection device 306 that creates a three-dimensional (3D) projected surface 308 from the laser light 304. The light projection device 306 creates a 3D surface projection 308 from the laser light 304. The light projection device 306 may be a holographic light projector such as a spatial light modulator or diffraction-grating. The light projection device 306 may be a laser pattern projector such as a digital micromirror device. The 3D surface projection 308 may be a custom 3D projection of laser light. The 3D surface projection 308 may not need to be confined to narrow beams.

The system 300 is able to create novel light surfaces that are monitored for intrusions by the obstruction 314.

The system 300 includes a receiver 310 that receives reflected laser light 312 that is reflected off of an obstruction 314.

The system 300 may form a light-gate. The system 300 may be a single-ended light-gate in that the receiver 310 is the same end as the transmitter 302, and relies on detecting the reflection 312 that is created by the obstruction 314 when the obstruction 314 obstructs the laser beam. The laser transmitter 302 and the receiver 310 may be combined as a laser rangefinder. The single ended nature of this system 300 means that several of the laser transmitters 302 and receivers 310 may be used to create a detection shell around an area of interest.

The system 300 may provide conic or other complex projective geometric surface type protections in a way not possible with conventional systems 100, 200. The system 300 generates a 3D light curtain 308 and the receiver 310 detects when and where the light curtain 308 is obstructed. The light surface may be formed using holograms or masks to cover varied and complex terrain in various environments and conditions.

The light projection device may generate a hologram that forms the 3D projective surface using interference patterns.

The light projection device may include a set of mirrors using caustic engineering to form the 3D projective surface through reflection.

The light projection device 306 may include a digital light projector (DLP) to forms the custom 3D surface projection 308 by masking. The light projection device 306 may alternatively use a spatial light modulator (SLM) to form the 3D surface projection 308 using holographic techniques.

The DLP and the SLM may dynamically update the 3D surface projection 308. The DLP and the SLM may step through a sequence of different light patterns. By modifying the 3D surface projection 308 in real time, the system 300 converts the monostatic light gate from a blanket detection system that is monitoring a wide area, into a search light that may be iteratively decreasing in size until the target has been pinpointed in three dimensions.

Using DLP (masking) alone, or SLM (holographic beam-forming) together may depend on any one or more of the power efficiency (losses in laser power due to beam- shaping), beam precision and stability, the processing requirements in order to calculate the appropriate hologram, and the speed at which the technology can step through a sequence of different holograms.

The system 300 may provide a compact, rapidly deployable light gate for intrusion detection or proximity violations. The system 300 may have applications to security (military and civil) for security perimeter monitoring. The system 300 may have applications to robotics for robotic proximity violations.

Conventional systems such as radar system 100 and LIDAR system 200 are three-dimensional detection and tracking technologies with complementary capabilities but have an important gap. The radar system 100 may be fast but may be confused by complex terrain. The LIDAR system 200 may be adapted to scan complex terrain but may be slow. The system 300 bridges the gap between radar system 100 and LIDAR system 200, by having the laser-rangefinder 302 that uses holographic beamformer 306 in order to form a light shield.

While phase-array beam-forming is technique in radar systems 100, and solid-state LIDAR systems 200 (where beam-steering is performed with MEMS mirrors, SLM or DLP arrays, or phased-array laser outputs) may be candidates for LIDAR for autonomous vehicles including self-driving cars. However, these systems 100, 200 are still effectively scanning LIDARs. In contrast, the novel system 300 described herein uses beam-forming for a laser rangefinder in order to create arbitrary-shaped perimeter monitoring capabilities. Furthermore, the application of a holographic laser rangefinder to perimeter defense and complex area monitoring is novel.

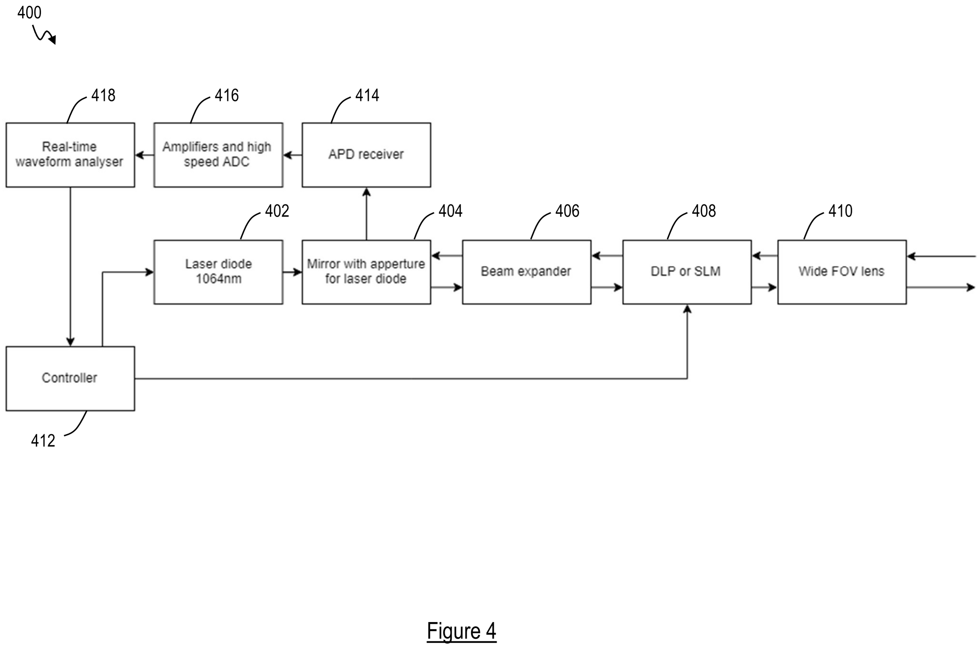

Referring to Figure 4, described therein is system 400 for detecting obstructions with holographic light, in accordance with an embodiment. The system 400 may be used in the system 300 to detect obstructions.

The system 400 includes a laser diode 402 for generating laser light.

The system 400 includes a mirror 404 with an aperture for laser diode 402. The aperture in the mirror 404 allows the laser light to pass through.

The system 400 includes a beam expander 406 that receives the light that passes through the aperture in the mirror 404. The beam expander 406 expands the laser light beam.

The system 400 includes a DLP and/or a SLM 408 to generate a 3D surface projection.

The system 400 includes a lens system 410 to spread the 3D surface projection. This 3D surface projection is emitted into the environment. When faced with an obstruction the holographic laser light is reflected back into the system 400 and onto the lens system 410. The reflected laser light passes through the lens system 410, the DLP or SLM 408, the beam expander 406, and onto the mirror 404.

The mirror 404 reflects the reflected laser light and the initial light onto an avalanche photodiode (APD) receiver 414. The APD receiver 414 receives the initial light and the reflected laser light.

The APD receiver 414 passes the APD signal to amplifiers and a high speed analog to digital converter (ADC) 416. The ADC 416 coverts the analog beam into a digital signal.

The system 400 includes a real-time waveform analyzer 418. The real-time waveform analyzer 418 analyzes the digital signal in real-time.

The system 400 includes a controller 412 that receives the output of the real-time waveform analyzer 418 to detect obstructions. The controller 412 controls the laser diode 402. The controller 412 controls the DLP or SLM 408.

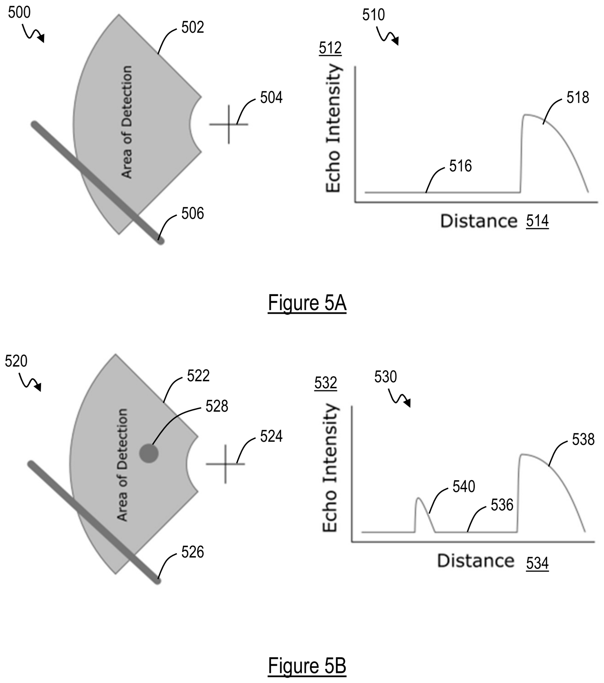

Referring to Figures 5A and 5B, described therein are representations 500, 520 of reflected signals of a light-curtain system, in accordance with an embodiment. The representations 500, 520, may be the digital signal analyzed by the waveform analyzer 418 of Figure 4.

At Figure 5A, the representation 500 includes an area of detection 502 relative to a sensor origin 504. The representation 500 shows an observed object 506 passing through the area of detection 502.

The graph 510 shows the echo intensity 512 over distance 514 for the reflected signal. The reflected signal includes a baseline 516 where there is no signal reflected. The reflected signal includes an intense echo 518 that corresponds to the observed object 506 that passes through the area of detection 502.

At Figure 5B, the representation 520 includes an area of detection 522 relative to a sensor origin 524. The representation 520 shows an observed object 526 passing through the area of detection 522. The representation 520 shows an observed object 528 within the area of detection 522.

The graph 530 shows the echo intensity 532 over distance 534 for the reflected signal. The reflected signal includes a baseline 536 where there is no signal reflected. The reflected signal includes an intense echo 538 that corresponds to the observed object 526 that passes through the area of detection 522. The reflected signal includes a medium intensity echo 540 that corresponds to the observed object 528 in the area of detection 522. Comparing the representation 520 with representation 500 allows the object 528 to be identified in the area of detection 522.

Figures 5A and 5B show example sensor using laser line projections. The light curves received by the sensor in both examples are shown to illustrate the object perception. The representations 500, 520 illustrate a polymorphic LIDAR curtain.

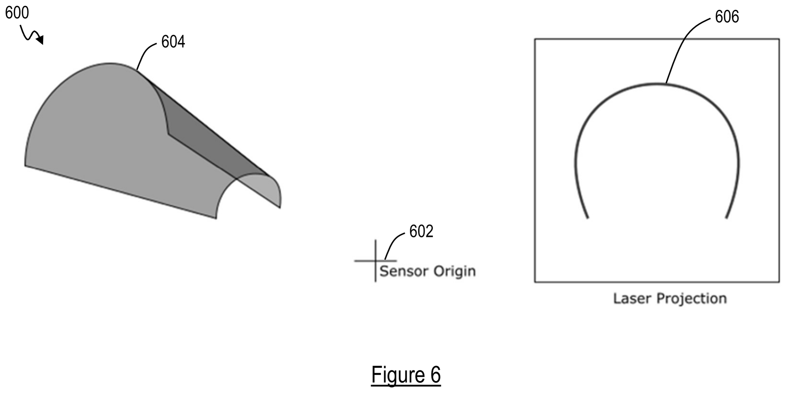

Referring to Figure 6, described therein is an example light curtain system 600, in accordance with an embodiment. The system 600 may be used in the system 300 to detect obstructions.

The example system 600 has a sensor 602 using a curved projection pattern 604. The curved projection pattern 604 has a sensing volume which is a conic segment. The sensor 602 projects a conic segment to create a curved sensing volume 606.

The sensor 602 shapes the laser beam into a projected pattern 604 such as a segment of a cone, or line. The sensor 602 may have wide angle receiving optics such that the whole projected beam is visible. The sensor 602 may measure the closest distance to any object within the volume of the shaped projection 604.

The sensor 602 may measure the distance to multiple objects that intersect with the projected pattern 604 provided that the multiple objects are not located at the same distance from the sensor 602.

In the example of a straight-line projection, this allows the sensor 602 to be used as light curtain, with the unique advantage that hardware may only need to be at one side of the curtain.

The system 600 may include optical techniques to shape the beam into a projected pattern. The optical techniques may include any one or more of a Powell lens and curved mirror, spatial light modulator (SLM), holographic mask, a digital micromirror device (DMD) array, and caustic engineered mirrors.

The system 600 may allow simple non-contact optical sensors 602 to detect objects entering light-curtain type volumes which can be shaped to the application in question. The system 600 may be used for pre-warning of collisions and safety interlock systems.

In some uses, the curved sensing volume 606 may partially cover a link of a revolute robot arm. The system 600 may include multiple such sensors 602 allows an overlapping surface of sensing volumes 606 to cover a significant proportion of space around the robotic arm.

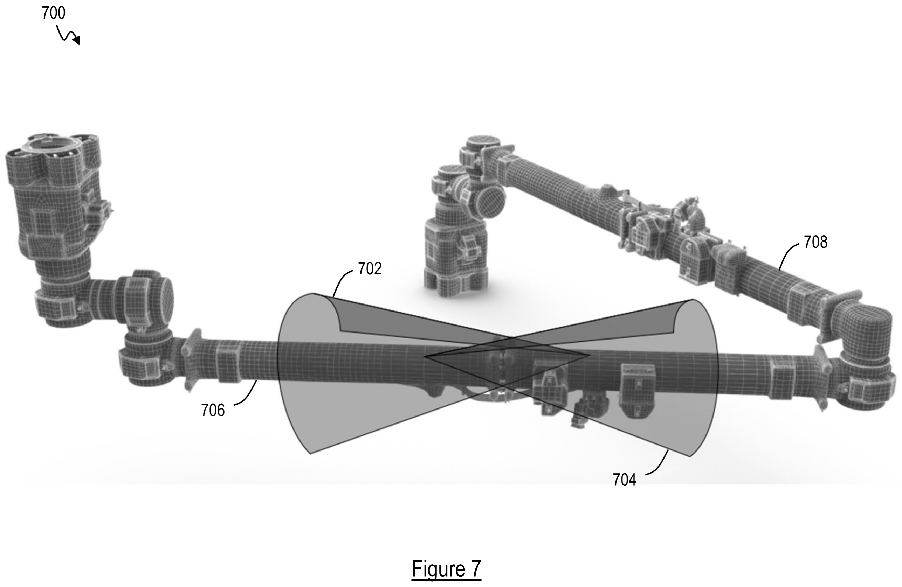

Referring to Figure 7, described therein is an example light curtain system 700 on a robotic arm, in accordance with an embodiment. The system 700 may used the system 300 to detect obstructions.

The system 700 includes a first projection rangefinder 702 and a second projection rangefinder 702 (shown by their sensing volumes). The projection rangefinders 702, 704 may be the system 300 of Figure 3. The projection rangefinders 702, 704 are attached to a first arm 706 of the robotic arm. The projection rangefinders 702, 704 project a curved sensing volume around the first arm 706 to enclose the first arm 706 in sensors. The projection rangefinders 702, 704 are able to detect if an object, such as a second arm 708 enters the curved sensing volume.

The holographic laser projection of the projection range finders 702, 704 convert a laser beam into a laser curtain, a surface. the projection range finders 702, 704 detect if the laser curtain is interrupted. The projection range finders 702, 704 are applied in the system 700 to the robot arms 706, 708 for collision avoidance. Conventional solutions to robotic arm collision avoidance may rely on extensive modelling and error margins. The system 700 may reduce those error margins and modelling requirements.

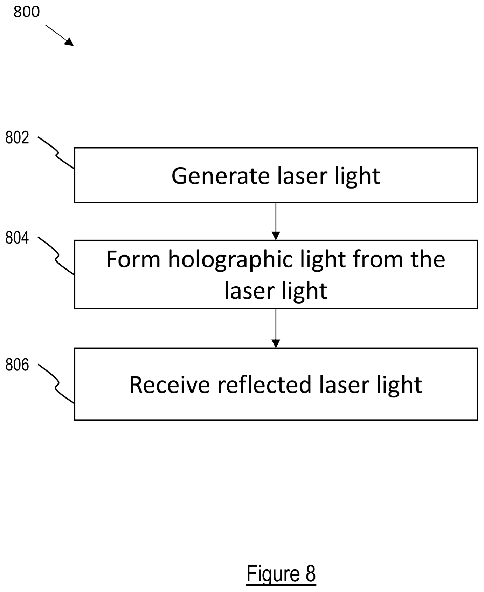

Referring to Figure 8, provided therein is a method 800 for detecting obtrusions. The method 800 may be performed by the system 300 of Figure 3. The method 800 may include any one or more of the aspects performed by the systems noted herein.

At 802, laser light is generated.

At 804, holographic light is formed from the laser light.

At 806, reflected laser light is received after being reflected off of the obstruction.

While the above description provides examples of one or more apparatus, methods, or systems, it will be appreciated that other apparatus, methods, or systems may be within the scope of the claims as interpreted by one of skill in the art.

## Claims

1. A system for detecting a collision, obstruction, or intrusion, the system comprising:
a laser transmitter that generates laser light;
a light projection device that forms a three-dimensional (3D) projective surface or surface projection from the laser light; and
a receiver that receives reflected laser light that is reflected off of the obstruction.

2. The system of claim 1, wherein the laser transmitter is a laser rangefinder.

3. The system of claim 1, wherein the 3D surface projection forms a light-gate, wherein the receiver is located at a same end as the transmitter.

4. The system of claim 1, wherein the light projection device is a digital light projector (DLP) that forms the 3D surface projection by masking; and/or
wherein the light projection device is a spatial light modulator (SLM) that forms the 3D surface projection by beam forming; and/or
wherein the light projection device generates a hologram that forms the 3D projective surface using interference patterns; and/or
wherein the light projection device includes a set of mirrors using caustic engineering to form the 3D projective surface through reflection.

5. The system of claim 1, wherein the light projection device dynamically updates the 3D surface projection by stepping through a sequence of different holograms; and/or
wherein dynamically updating the 3D surface projection provides a blanket detection system that monitors a wide area and that is iteratively decreased in size until a target has been pinpointed in three dimensions.

6. The system of claim 1 further comprising a mirror with an aperture that allows the laser light to pass through; and/or
wherein the system further comprising a beam expander that receives the light that passes through the aperture in the mirror, wherein the beam expander expands the laser light beam.

7. The system of claim 6, wherein the mirror reflects the reflected laser light and the laser light onto an avalanche photodiode (APD) receiver; and/or
wherein the APD receiver passes a received signal to a high-speed analog to digital converter (ADC), wherein the ADC coverts the analog beam into a digital signal.

8. The system of claim 6 further comprising a real-time waveform analyzer that analyzes the digital signal in real-time; and/or
wherein the system further comprising a controller that receives the output of the real-time waveform analyzer to detect obstructions.

9. The system of claim 1 further comprising a lens system to spread the 3D surface projection.

10. The system of claim 1 further comprising a robotic arm, wherein the 3D surface projection includes a curved sensing volume that partially covers a link of the robotic robot arm.

11. The system of claim 1 further comprising optical techniques to shape the laser light into a projected pattern, wherein the optical techniques include any one or more of a Powell lens and curved mirror, spatial light modulator (SLM), holographic mask, a digital micromirror device (DMD) array, and caustic engineered mirrors.

12. The system of claim 1, wherein the system is used in collision avoidance for proximity and docking operations of space objects.

13. A method for detecting a collision, obstruction, or intrusion, the method comprising:
generating laser light;
forming a 3D surface projection from the laser light; and
receiving reflected laser light that is reflected off of the obstruction.

14. The method of claim 13, further comprising:
dynamically updating the 3D surface projection by stepping through a sequence of different holograms.

15. The method of claim 13 further comprising:
forming the laser light into a projected pattern, wherein the optical techniques include any one or more of a Powell lens and curved mirror, spatial light modulator (SLM), holographic mask, a digital micromirror device (DMD) array, and caustic engineered mirrors.
